# EUROPÄISCHE PATENTANMELDUNG

(11) **EP 1 295 816 A2**
(43) Veröffentlichungstag der Anmeldung: **26.03.2003**
(21) Anmeldenummer: 02017920.6
(22) Anmeldetag: 09.08.2002
(51) Int. Cl.: B65G 17/44

(54) **Stauförderer zum Transport von Stückgut, insbesondere Werkstückträgern**

(30) Priorität: 24.09.2001 DE 10146981
(71) Anmelder: SIEMENS AKTIENGESELLSCHAFT, 80333 München (DE)
(72) Erfinder: Umic, Robert, 70806 Kornwestheim (DE); Umic, Zwonko, 71686 Remseck (DE)

(57) **Zusammenfassung**

Die Erfindung betrifft einen Stauförderer, insbesondere zum Transport von Werkstückträgern, mit mindestens einer endlos geführten Förderkette, die über Laufrollen abgestützt ist, die an beidseitig über die Laschen der Kette hinaus verlängerten Bolzen gelagert sind. Um einen Stauförderer der eingangs beschriebenen Art wirtschaftlich so auszugestalten, dass auch bei höheren Gewichtsklassen Anlaufverzögerungen nach dem Stauen des Fördergutes weitgehend vermieden werden und das Befahren von Steigstrecken möglich wird, wird erfindungsgemäß vorgeschlagen, die Tragelemente (9,9a,9b) als zwischen den Laufrollen (4) auf jeweils zwei benachbarte Bolzen (3) aufklemmbare Tragstücke (9,9a,9b) mit planen Auflageflächen (14) für das Stückgut auszubilden und auf ihren der Auflagefläche (14) entgegengesetzten Seiten eingeformte Ausnehmungen (10) vorzusehen, die jeweils einen der beiden benachbarten Bolzen (3) teilweise umgreifen.

## Beschreibung

Die Erfindung betrifft einen Stauförderer zum Transport von Stückgut, insbesondere Werkstückträgern, mit mindestens einer endlos über Umlenkräder geführten Stauförderkette, die zwischen den Umlenkrädern auf in Förderrichtung verlaufenden Laufbahnen über Laufrollen abgestützt ist, die an beidseitig über die Laschen der Kette hinaus verlängerten Bolzen der Kette gelagert sind, und mit auf den Bolzen der Kette befestigten und über die Kette in Richtung des Stückgutes hinausragenden Tragelementen zur Aufnahme des Transportgutes.

Aus der DE 34 32 042 A1 ist ein Stauförderer mit zwei parallel zueinander und voneinander beabstandeten sowie in Förderrichtung verlaufenden Staurollenketten bekannt, die jeweils über an den Enden des Fördersystems angeordnete Umlenkräder endlos umlaufen. Die Staurollenketten weisen zur Aufnahme des Stückgutes als Staurollen ausgebildete Tragstücke auf, die in Richtung des Transportguts zur Abstützung desselben über die Ketten hinausragen. Die Staurollen sind auf den Bolzen der Ketten, über die die Laschen der Ketten untereinander verbunden werden, und zwischen diesen Laschen gelagert. Die Kettenteilung ist so gewählt, daß die Staurollen frei drehbar sind, um diese Staurollenkette für den sog. Trenn- und Staueffekt des Fördersystems einsetzen zu können, d.h. das Transportgut kann von außen über Anschläge angehalten werden, wobei die Staurollenkette weiterläuft und die Staurollen unter dem ruhenden Transportgut abrollen. Zum Wiederanfahren des Transportgutes und dessen Weitertransport sind die Staurollen leicht gebremst gelagert und können daher nach Lösen des Anschlages das Transportgut mitnehmen. Die Ketten sind jeweils über Laufrollen auf zwischen den Umlenkrädern angeordneten Tragelementen in Form von Schienen abgestützt. Die Laufrollen sind jeweils auf den Bolzen der Kette gelagert, die hierfür beidseitig über die Laschen hinaus verlängert sind.

Die Kettenförderer, sind entweder mit Kunststoff- oder Stahl-Staurollen versehen. Der Grund für diese Ausgestaltung ist, dass die entsprechenden Förderer für den Transport von Werkstückträgern spezieller Gewichtsklassen entwickelt wurden, wobei die Staurollen in den eingesetzten Förderketten den Stau und die Vereinzelung der Werkstückträger ermöglichen. Es hat sich gezeigt, dass diese Elemente für verschiedene Anwendungen innerhalb eines vorhandenen Fördererbaukastens nicht geeignet sind. So ist man nicht inder Lage bei höheren Fördergutgewichten einen schnellen Transfer, z.B. bei Hub-Transfereinrichtungen zu fahren, da die vorhandenen Förderketten mit Staurollen das Fördergut nur mit Verzögerung (Schlupf) mitnehmen können. Aus dem genannten Grund ist es auch nicht möglich, mit Fördergütern entsprechender Gewichtsklassen Steigstrecken zu fahren. Auch eignen sich die vorhandenen Förderketten mit Staurollen nicht für Fördergüter wie z.B. Tablare, Kunststoffbehälter und dergl. mit "Waffelbodenstrukturen" etc., da die Staurollen der Förderketten entweder die Bodenstrukturen durch den zwangsläufigen "Sägezahneffekt" beschädigen oder in die nicht glatten Strukturen eingreifen.

Vorhandene Gurtförderer sind bei höheren Gewichtsklassen aufgrund des eintretenden "Sandwich-Effektes", also der Reibung zwischen Fördergut, Gurt und Gurtauflage, ab einem bestimmten Gewicht nicht mehr geeignete Alternativen.

Aufgabe der vorliegenden Erfindung ist es, einen Stauförderer der eingangs beschriebenen Art wirtschaftlich so auszugestalten, dass auch bei höheren Gewichtsklassen Anlaufverzögerungen nach dem Stauen des Fördergutes weitgehend vermieden werden und das Befahren von Steigstrecken möglich wird.

Zur Lösung der Aufgabe wird erfindungsgemäß vorgeschlagen, dass die Tragelemente als zwischen den Laufrollen auf jeweils zwei benachbarte Bolzen aufklemmbare Tragstücke mit planen Auflageflächen für das Stückgut ausgebildet sind und auf ihren auf der Auflagefläche entgegengesetzten Seiten eingeformte Ausnehmungen aufweisen, die jeweils einen der beiden benachbarten Bolzen teilweise umgreifen.

Statt der bisher verwendeten Staurollen auf den Bolzen einer Staurollenkette werden nunmehr Tragstücke auf die Bolzen aufgeklemmt, auf denen das Stückgut aufliegt. Die Tragstücke sind so gestaltet, dass sie clipartig auf jeweils zwei benachbarte Bolzen aufsetzbar und dort fixierbar sind und ihre Auflagefläche zur Auflage des Stückgutes nach oben über die Kette hervorsteht. Durch Aufklemmen der Tragstücke auf eine gerade Anzahl von Bolzen können alle Kettenglieder zu einem gurtähnlichen Tragelement gemacht werden, auf dem das Stückgut sicher aufliegt. Gegenüber bekannten Gurtförderern, bei denen der Gurt auf einer glatten Unterlage schleift, wird der Reibwert deutlich reduziert, weil die von Staurollenketten bekannten Laufrollen zum Abtragen der erfindungsgemäßen Kette verwendet werden. Beim Stauen des Stückgutes gleiten die Tragstücke der Kette unter dem festgehaltenen Stückgut hinweg. Wird der den Stau hervorrufende Anschlag weggefahren, so beschleunigen die Tragstücke das darauf aufliegende Stückgut nahezu verzögerungsfrei, so dass sich die Verfügbarkeit der Anlage und damit der Durchsatz deutlich erhöhen.

Damit die Tragstücke auf den Bolzen sicher halten, ist nach einem weiteren Merkmal der Erfindung vorgesehen, dass die Ausnehmungen mindestens einen der beiden Bolzen hinterschneiden. Wie ein Clip werden die Tragstücke über den Bolzen geschoben; die Hinterschneidung verhindert ein Abrutschen beim Umlauf der Kette.

Nach einem besonders wichtigen Merkmal der Erfindung ist vorgesehen, dass jedes Tragstück in und entgegen der Förderrichtung stirnseitige, in Richtung der Auflagefläche konvergierende Abschrägungen aufweist. Mit diesen Abschrägungen an jedem Tragstück wird erreicht, dass die mit den Tragstücken bestückte Kette nicht nur positiv, sondern auch negativ um Umlenkrollen geleitet werden kann. Dies ist häufig im Antriebsbereich der Kette erforderlich, wo diese S-förmig über ein Antriebsrad geleitet wird. Die Abschrägungen der Stirnseiten sorgen dafür, dass sich die Tragstücke benachbarter Kettenglieder nicht berühren, die Schräge ist entsprechend dem gewünschten Umlenkradius zu wählen.

Vorzugsweise sind die Tragstücke aus einem verschleißfesten Kunststoff oder Gummi gefertigt. Welcher Werkstoff letztendlich Verwendung findet, hängt von den äußeren Bedingungen und insbesondere von den zu transportierenden Werkstücken und Gewichten ab.

Je nach Bedarf, ob beispielsweise die Mitnahme des Fördergutes wichtig ist oder das Gleiten der Tragstücke unter dem gestauten Fördergut Vorrang hat, kann bedarfsweise mindestens die Auflagefläche der Tragstücke aus einem Material mit einem niedrigen oder hohen Reibkoeffizienten bestehen. Hinsichtlich der Materialauswahl ist der Fachmann weitgehend frei; lediglich die Verschleißbeständigkeit des Werkstoffes sollte Beachtung finden.

Es ist auch denkbar, zur Erhöhung des Reibkoeffizienten die Auflageflächen zu profilieren oder aufzurauhen. So können diese quer zur Förderrichtung verlaufende Rillenprofile mit sägezahnartigem Querschnitt aufweisen, wobei sanft ansteigende Flanken mit steil abfallenden Gegenflanken abwechseln. Je nach Förderrichtung kann beispielsweise ein Stauen des Werkstückes so erfolgen, dass die Kette in Richtung der sanft ansteigenden Flanken leicht unter dem stehenden Fördergut hindurchgezogen werden kann, während bei Laufrichtungsumkehr des Stauförderers eine verbesserte Mitnahme durch die steilen Gegenflanken erzielbar ist.

Um die erfindungsgemäßen Tragstücke auch auf eine Mittellaschenkette aufklemmen zu können, ist nach einem weiteren Merkmal der Erfindung vorgesehen, dass zur Aufnahme eines Teilbereiches der Lasche das Tragstück mittig längsgeschlitzt ist. Auf diese Weise kommt ein besonderer Vorteil der Erfindung zur Geltung, nämlich dass herkömmliche Staurollenketten mit versetzt gelagerten Staurollen unverändert als erfindungsgemäße Stauketten mit aufgeklemmten Tragstücken verwendet werden können. Das vereinfacht die Lagerhaltung und erhöht die universelle Verwendbarkeit der Kette.

Die Tragstücke ermöglichen auch ein Aufklemmen auf eine kurvengängige Stauförderkette dadurch, dass die den Laufrollen zugewandten Seitenflanken der Tragstücke im vorderen und hinterne Bereich abgeschrägt sind.

Die erfindungsgemäßen Tragstücke sind leicht auf die benachbarten Bolzen der Kettenglieder aufsteckbar und abnehmbar, und können beispielsweise bei Verschleiß oder Beschädigung ausgetauscht werden. Günstigerweise ist der Innendurchmesser der Ausnehmungen in den Tragstücken dem Außendurchmesser der Bolzen angepasst, wobei die Ausnehmungen in Richtung der Bolzen in einer solchen Breite geschlitzt sind, dass das Tragstück unter elastischer Verformung über die Bolzen schiebbar ist. Dadurch entsteht eine Art Druckknopfeffekt, durch den die Tragstücke sicher, auch beim Umlauf der Kette um ihre Umlenkräder, gehalten werden.

Mit der Erfindung wird ein Kettenförderer geschaffen, der verschiedene Vorteile in sich vereinigt. So ist ein schneller Transfer weitgehend ohne "Schlupf" möglich.
Auch höhere Gewichtsklassen sind fördertechnisch realisierbar, das Befahren von Steigstrecken ist möglich. Für die jetzige Technik problematische Fördergüter mit unebenen Bodenstrukturen werden förderbar, ohne daß Sonderlösungen benötigt werden. Das Kettenförderprinzip ist nachträglich integrierbar, die Bauteile sind austauschbar: Die Tragförderkette stellt sowohl wirtschaftlich wie technisch eine geeignete Lösungen und Ergänzungen dar, mit der spezielle Gesamt- oder Einzelanwendungen innerhalb eines vorhandene Förderer-Baukastens zu realisieren sind, ohne dass nur ein weiteres Teil verändert werden muss.

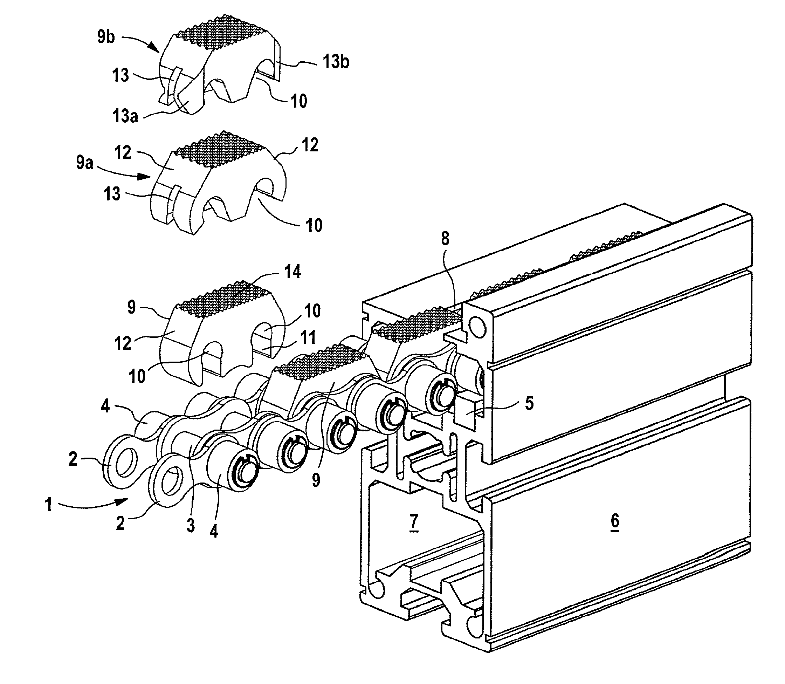

Ein Ausführungsbeispiel der Erfindung ist in der Zeichnung dargestellt und wird nachfolgend beschrieben.

In der einzigen Zeichnungsfigur ist in perspektivischer Darstellung eine Stauförderkette nach der Erfindung dargestellt, die insgesamt mit 1 bezeichnet ist. Die Stauförderkette 1 besteht aus Laschen 2 und diese verbindenden Bolzen 3, auf denen beidseitig der Laschen Rollen 4 drehbar gelagert sind. Die Laufrollen 4 werden zwischen den (nicht dargestellten) Umlenkrädern auf Laufbahnen 5 in dem Systemprofil 6 geführt; der nicht dargestellte Rücklauf der Stauförderkette 1 erfolgt im Bereich 7 des Systemprofiles 6. Das Systemprofil 6 ist im oberen Bereich, wie bei 8 erkennbar längsgeschlitzt und bildet einen Durchgriffsschlitz für die erfindungsgemäßen Tragstücke 9. Diese Tragstücke 9 sind auf jeweils zwei benachbarte Bolzen 3 der Stauförderkette 1 aufgesteckt, wozu jedes Tragstück 9 zwei im Abstand der Bolzen 3 eingebrachte Ausnehmungen 10 aufweist, die "druckknopfartig" gestaltet sind. Dazu sind die Ausnehmungen als dem Außendurchmesser der Bolzen 3 entsprechende Bohrungen im Tragstück 9 ausgebildet, die nach unten hin eine Schlitzöffnung haben, die etwas kleiner als der Durchmesser der Bolzen 3 ist. Da die Tragstücke 9 aus einem Kunststoffmaterial mit ausreichender Elastizität gefertigt sind, können die Tragstücke 9 über die Bolzen 3 gedrückt werden, so dass die Schlitze 11 sich aufweiten und nach dem Einklinken der Bolzen 3 in die Ausnehmungen 10 hinter dem Bolzen zurückweichen. Auf diese Weise erfolgt eine sichere Befestigung des Tragstückes 9 auf den Bolzen 3, die auch im Umlenkbereich und im Untertrum der Stauförderkette einen sicheren Halt gewährleistet.

In der Zeichnungsdarstellung ist im mittleren Bild eine weitere Variante eines Tragstückes, dort mit 9a bezeichnet, dargestellt. Wie beim Tragstück 9 sind die beiden Stirnseiten unter einem Winkel von ca. 45° - wie bei 12 dargestellt - abgeschrägt, wodurch es möglich wird, dass die Stauförderkette 1 auch um einen negativen Radius, also nach oben gebogen, umgelenkt werden kann, ohne dass sich die Tragstücke 9 bzw. 9a gegenseitig behindern. Bei dem Tragstück 9a ist in der Längsrichtung im unteren Bereich ein Längsschlitz 13 erkennbar, der erforderlich ist, wenn eine sog. Mittellaschenkette verwendet wird. Bei einer solchen Kette werden jeweils zwei benachbarte Bolzen durch zweiseitig beabstandete Laschen verbunden, während ein benachbartes Bolzenpaar durch eine mittig auf dem Bolzen angeordnete Lasche verbunden wird. Um dennoch die Tragstücke 9 aufklemmen zu können, ist der Längsschlitz 13 vorgesehen, der die Mittellasche übergreift. Erkennbar bei dem Tragstück 9a ist eine anders gestaltete Ausformung der Ausnehmung 10, wobei hier das Klemmen des Tragstückes auf dem Bolzen 3 weitgehend zwischen den äußeren Flanken der äußeren Ausnehmungen 10erfolgt. Diese sind so gewölbt, dass sie die Bolzen teilweise hintergreifen.

Schließlich ist bei 9b ein weiteres Tragstück in einer abgeänderten Ausführung dargestellt; hier sind im Flankenbereich 13, 13a und 13b Abschrägungen vorgenommen worden, die es ermöglichen, das Tragstück 9a auch auf einem kurvengängigen Stauförderer aufzusetzen. Die Abschrägungen der Flanken 13a und 13b ermöglichen ein Schrägstellen der Tragstücke zu den Laschen 2 des Stauförderers.

Wie erkennbar, ist die Auflagefläche 14 jedes Tragstückes profiliert, um einen sicheren Halt für eine aufliegende (nicht getzeigte) Werkstückpalette zu gewährleisten. Der Werkstoff der Tragstücke besteht aus einem Polymär-Kunststoff; die Form kann im Spritzgießverfahren hergestellt werden. Bei den Tragstücken handelt es sich um auswechselbare Verschleißteile, wodurch die Standzeit eines Stauförderers der beschriebenen Art deutlich verlängert werden kann.

## Patentansprüche

1. Stauförderer zum Transport von Stückgut, insbesondere Werkstückträgern, mit mindestens einer endlos über Umlenkräder geführten Stauförderkette, die zwischen den Umlenkrädern auf in Förderrichtung verlaufenden Laufbahnen über Laufrollen abgestützt ist, die an beidseitig über die Laschen der Kette hinaus verlängerten Bolzen der Kette gelagert sind, und mit auf den Bolzen der Kette befestigten und über die Kette in Richtung des Stückgutes hinausragenden Tragelementen zur Aufnahme des Transportgutes,
**dadurch gekennzeichnet,**
**dass** die Tragelemente (9,9a,9b) als zwischen den Laufrollen (4) auf jeweils zwei benachbarte Bolzen (3) aufklemmbare Tragstücke (9,9a,9b) mit planen Auflagefläche (14) für das Stückgut ausgebildet sind und auf ihren der Auflagefläche (14) entgegengesetzten Seiten eingeformte Ausnehmungen (10) aufweisen, die jeweils einen der beiden benachbarten Bolzen (3) teilweise umgreifen.

2. Stauförderer nach Anspruch 1,
**dadurch gekennzeichnet,**
**dass** die Ausnehmungen (10) der Tragstücke (9,9a,9b) mindestend einen der beiden Bolzen (3) hinterschneiden.

3. Stauförderer nach Anspruch 1,
**dadurch gekennzeichnet,**
**dass** jedes Tragstück (9,9a,9b) in und entgegen der Förderrichtung stirnseitige, in Richtung der Auflagefläche (14) konvergierende Abschrägungen (12) aufweist.

4. Stauförderer nach Anspruch 1,
**dadurch gekennzeichnet,**
**dass** die Tragstücke (9,9a,9b) aus einem verschleißfesten Kunststoff oder Gummi gefertigt sind.

5. Stauförderer nach Anspruch 1,
**dadurch gekennzeichnet,**
**dass** mindestens die Auflageflächen (14) der Tragstücke (9,9a,9b) bedarfsweise aus einem Material mit einem niedrigen oder hohen Reibungskoeffiziente besteht.

6. Stauförderer nach Anspruch 1,
**dadurch gekennzeichnet,**
**dass** die Auflageflächen (14) profiliert oder aufgerauht sind.

7. Stauförderer nach Anspruch 1,
**dadurch gekennzeichnet,**
**dass** die Auflageflächen (14) quer zur Förderrichtung verlaufende Rillenprofile mit sägezahnartigem Querschnitt aufweisen, wobei in Förderrichtung sanft ansteigende Flanken mit steil abfallenden Gegenflanken abwechseln.

8. Stauförderer nach Anspruch 1,
**dadurch gekennzeichnet,**
**dass** zum Aufklemmen des Tragstückes (9,9a,9b) auf eine Mittellaschenkette, das Tragstück (9,9a,9b) zur Aufnahme eines Teilbereiches der Lasche (2) mittig längsgeschlitzt ist.

9. Stauförderer nach Anspruch 1,
**dadurch gekennzeichnet,**
**dass** zum Aufklemmen des Tragstückes (9,9a,9b) auf eine kurvengängige Stauförderkette (1) die den Laufrollen (4) zugewandten Seitenflanken (13) des Tragstückes (9,9a,9b) im vorderen und hinteren Bereich (13a,13b) beidseitig abgeschrägt sind.

10. Stauförderer nach Anspruch 1,
**dadurch gekennzeichnet,**
**dass** die Innendurchmesser der Ausnehmungen (10) dem Außendurchmesser der Bolzen (3) angepaßt sind und jeweils nach unten in einer solche Breite geschlitzt (11) sind, daß das Tragstück (9,9a,9b) unter elastischer Verformung über die Bolzen (3) schiebbar ist.
